# DEMANDE DE BREVET EUROPEEN

(11) **EP 0 655 305 A1**
(43) Date de publication de la demande: **31.05.1995**
(21) Numéro de dépôt: 94490054.7
(22) Date de dépôt: 07.11.1994
(51) Int. Cl.: B29C 45/14, B29C 70/78, B29D 9/00, B32B 3/22

(54) **Procédé de fabrication d'une structure stratifiée, structure obtenue par ledit procédé et application à la fabrication d'éléments d'habillage intérieur d'une carrosserie de véhicule**

(30) Priorité: 15.11.1993 FR 9313811
(71) Demandeur: REYDEL Société Anonyme, F-59147 Gondecourt (FR)
(72) Inventeur: Choquet, Alain, F-59147 Gondecourt (FR)
(74) Mandataire: Duthoit, Michel

(57) **Abrégé**

Procédé de fabrication d'une structure stratifiée (1), destinée notamment à la fabrication d'éléments d'habillage intérieur d'une carrosserie de véhicule, consistant à réaliser la structure (1) à partir d'une couche d'un matériau rigide (2) support constituant un insert (3) et une couche d'un matériau souple constituant une peau (6).

Selon l'invention, on prévoit une ou plusieurs incisions (7) dans la couche de matériau rigide (2) dans des zones prédéterminées, et l'on couvre au moins partiellement, au moins l'une des faces (4) du matériau support (2) par la dite couche de matériau souple (5) afin qu'elle coopère avec la ou les incisions (7) localisées pour conférer des caractéristiques de souplesse dans les dites zones.

L'invention a également pour objet une structure stratifiée (1) obtenue par la mise en oeuvre du procédé ainsi qu'une application de ce procédé à la fabrication d'éléments d'habillage intérieur d'une carrosserie de véhicule.

## Description

La présente invention est relative à un procédé de fabrication d'une structure stratifiée ainsi qu'une application du procédé à la fabrication d'éléments d'habillage intérieur d'une carrosserie de véhicule.

Bien qu'ayant été développée plus spécialement pour réaliser des pièces dans le domaine automobile, il est néanmoins à noter que la présente invention pourra s'appliquer à tous les secteurs de l'activité économique dans lesquels on doit utiliser des structures stratifiées réalisées par injection de matière thermoplastique qui doivent présenter des propriétés d'élasticité et de souplesse notamment sous l'action de contraintes mécaniques.

Actuellement, pour fabriquer des accoudoirs ou d'autres éléments d'habillage intérieur d'un véhicule, on a recours à des techniques classiques de plasturgie de matière thermoplastique et thermodurcissable.

C'est ainsi que, pour confectionner ces accoudoirs, on réalise une couche d'un matériau rigide constituant un insert que l'on recouvre sur au moins l'une de ses faces par une feuille d'un matériau souple constituant une peau.

Compte tenu de la rigidité du matériau constituant l'insert, de tels accoudoirs ne peuvent présenter des capacités de souplesse et de déformabilité notamment sous l'action de contraintes mécaniques, ce qui nuit à l'aspect agréable recherché pour ces objets.

Pour remédier à cet inconvénient, on a pensé à disposer entre l'insert et la peau une couche d'une matière élastique qui présente une certaine souplesse telle que par exemple de la mousse.

Toutefois, la mise en place de cette mousse nécessite l'utilisation de moyens complexes dans la chaîne de fabrication, qui se répercute sur le coût et le prix de ces articles.

Afin de rendre plus souples les accoudoirs ou d'autres éléments d'habillage intérieur d'un véhicule, on a également pensé à réaliser par thermo-gainage une structure constituée d'une part par un insert et d'autre part par une peau souple entre lesquels on dispose un élément élastique.

Toutefois, un tel procédé de réalisation est complexe à mettre en oeuvre et, en pratique, les accoudoirs obtenus par la mise en oeuvre de ce procédé n'offrent pas entière satisfaction.

Ainsi, les modes de réalisation connus de tels accoudoirs sont retenus, dans le domaine des véhicules, pour le haut de gamme mais n'équipent pas les modèles grand public, de gamme moyenne et basse, du fait du coût de revient.

Le but de la présente invention est de proposer un procédé de fabrication d'une structure stratifiée, destinée notamment à la fabrication d'éléments d'habillage d'intérieur d'une carrosserie, qui remédie aux inconvénients des procédés actuellement connus ainsi qu'une structure stratifiée obtenue à partir de ce procédé et une application de tels éléments d'habillage.

En particulier, le procédé de la présente invention permet de réaliser une structure stratifiée qui présente des propriétés satisfaisantes de déformabilité, d'élasticité et de souplesse sous l'action de contraintes mécaniques, tout en conservant un aspect esthétique souhaité.

Un autre but de la présente invention est de proposer une application de cette structure à la fabrication d'accoudoirs et/ou d'éléments d'habillage intérieur d'une carrosserie de véhicule.

Un autre but de la présente invention est de proposer un procédé de fabrication d'une structure stratifiée qui peut être mis en oeuvre en continu selon des cadences élevées afin de produire des stratifiés de qualité à faible prix.

Un autre but de la présente invention réside dans le fait qu'elle permet de fabriquer des stratifiés pouvant être recyclés, en utilisant des matières compatibles ce qui en accroît les capacités d'utilisation.

D'autres buts et avantages de la présente invention apparaîtront au cours de la description qui va suivre qui n'est cependant donnée qu'à titre indicatif et qui n'a pas pour but de la limiter.

Selon l'invention, le procédé de fabrication d'une structure stratifiée, destinée notamment à la fabrication d'éléments d'habillage intérieur d'une carrosserie de véhicule, consiste à réaliser la structure à partir d'une couche d'un matériau rigide support constituant un insert et d'une couche d'un matériau souple constituant une peau. Il est caractérisé par le fait que :
- l'on prévoit une ou plusieurs incisions de la couche de matériau support dans des zones prédéterminées,
- l'on couvre au moins partiellement, au moins l'une des faces du matériau support dans la dite couche de matériau souple afin qu'elle coopère avec la ou les incisions localisées pour conférer des caractéristiques de souplesse dans les dites zones.

L'invention a également pour objet une structure stratifiée, notamment obtenue par la mise en oeuvre du procédé, comprend une couche d'un matériau rigide support constituant un insert et une couche d'un matériau souple constituant une peau. Elle est caractérisée par le fait que la couche de matériau support comporte une ou plusieurs incisions dans des zones prédéterminées qui coopèrent avec une couche de matériau souple pour conférer des caractéristiques de souplesse dans les dites zones.

Comme nous l'avons évoqué ci-dessus, la présente invention trouve une application particulière mais non exclusive à la fabrication d'accoudoirs et/ou d'éléments d'habillage intérieur d'une carrosserie de véhicule.

La présente invention sera mieux comprise à la lecture de la description suivante accompagnée des dessins en annexe qui en font partie intégrante.

La figure 1 est une vue de dessus qui montre un élément d'habillage conforme à l'invention.

La figure 2 est une vue schématique en coupe selon la ligne II-II de la figure 1, qui illustre une structure stratifiée conforme à l'invention.

La figure 3 est une vue schématique qui illustre la déformation de la structure stratifiée conforme à l'invention sous l'action d'une contrainte mécanique.

La figure 4 constitue une variante, montrée schématiquement en coupe de la structure de l'invention conférant à celle-ci une fonction esthétique complémentaire.

La présente invention vise un procédé de fabrication d'une structure stratifiée, la structure stratifiée obtenue notamment par ce procédé ainsi qu'une application à la fabrication d'éléments d'habillage intérieur d'une carrosserie de véhicule tel que par exemple une portière qui présente un accoudoir.

Bien que plus particulièrement développée dans le cadre de l'industrie automobile, la présente invention s'appliquera à tous types d'objets réalisés par moulage de matière plastique et qui présente une structure stratifiée devant présenter des propriétés de déformabilité de souplesse et d'élasticité sous l'action de contraintes mécaniques telles que par exemple de pression.

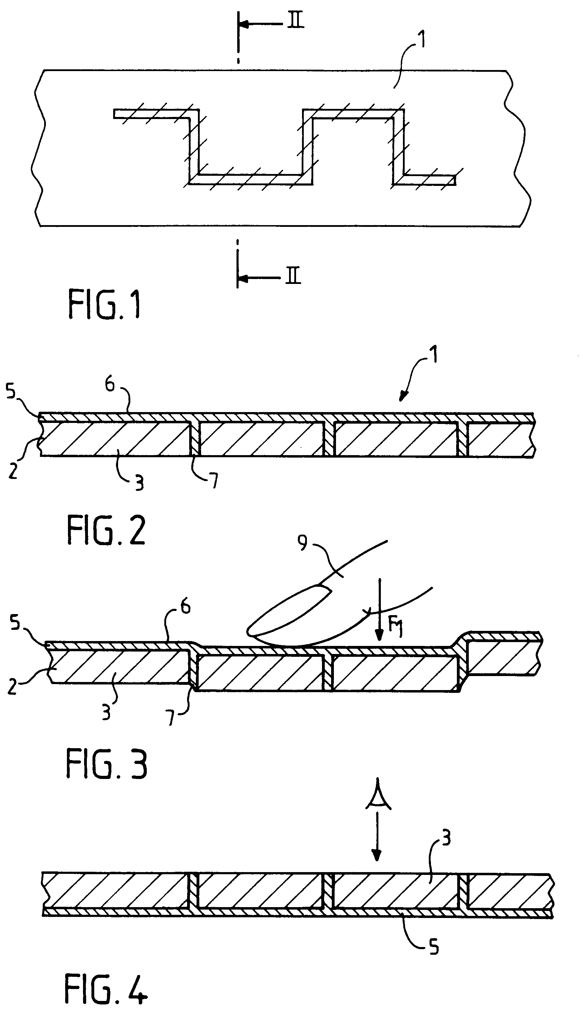

En se référant aux figures 1, 2, et 3, on voit une structure stratifiée 1, conforme à l'invention, comprenant principalement une couche 2 de matériau support, notamment rigide, constituant un insert, et une couche 5 d'un matériau souple, constituant une peau 6.

Une telle structure est réalisée à partir de procédés de fabrication qui mettent en oeuvre des techniques classiques de plasturgie de matières thermoplastiques.

A ce sujet, dans une variante, on peut envisager une technique de "surmoulage" dans laquelle on réalise d'abord l'insert puis on le recouvre par une peau. Dans une autre variante, c'est une technique de "sous-moulage" qui est envisageable, c'est-à-dire que dans ce cas c'est l'insert qui sera réalisé sous une peau préalablement élaborée.

Cela étant, on réalise, par exemple par injection, la couche d'un matériau support 2 thermoplastique, tel que notamment du polypropylène, ou tout autre matériau thermoplastique susceptible d'être injecté, et qui présente, des propriétés mécaniques de rigidité suffisantes afin de constituer l'insert 3.

Selon l'invention, au moins l'une des faces 4 de l'insert 3 est couverte au moins partiellement par une couche 5 d'un matériau thermoplastique, tel que par exemple du polychlorure de vinyl, de l'élastomère, des polyoléfines, ou tout autre matériau plastique comme du polyuréthane pouvant être injecté, afin de constituer la peau 6.

Cette peau 6 constitue la face externe de l'objet, et, notamment, dans la forme de réalisation et d'application décrite, celle de l'élément d'habillage intérieur de la carrosserie de véhicule, tel que par exemple un accoudoir.

La solidarisation entre la peau 6 et l'insert 3 peut être réalisée par tout moyen, et par exemple par de la colle, ou par tout autre agent d'adhésion, ou encore par accrochage chimique ou mécanique.

Cela étant, selon l'invention, on prévoit une ou plusieurs incisions 7, dans des zones prédéterminées de la couche du matériau support 2, constituant l'insert 3, et, l'on prévoit la couche 5 afin qu'elle coopère avec la ou les incisions 7 localisées en vue de rendre la structure stratifiée 1 plus élastique et plus souple sous l'action de contraintes mécaniques notamment.

Dans le cadre de la mise en oeuvre du procédé dit précédemment de "surmoulage", la couche de matériau thermoplastique support 2 est obtenue par injection d'une matière thermoplastique, et, la mise en place de la couche 5 de matériau thermoplastique souple est réalisée par surmoulage par injection d'une matière thermoplastique.

Les incisions 7 précitées peuvent être formées directement par moulage lors de l'injection du thermoplastique 2 de l'insert 3.

Cependant, il est à remarquer que ces incisions 7 peuvent être obtenues par une découpe transversante de la couche de matériau thermoplastique 2, notamment par des techniques classiques de découpe par laser ou par jet d'eau, qui mettent en oeuvre des moyens connus.

Par ailleurs, dans cette technique de surmoulage, il est à noter qu'on remplit les incisions 7 par de la matière thermoplastique de sorte qu'elle coopère avec la couche de matériau support 2 en assurant à la structure stratifiée 1 une cohésion assurant une transmission et une répartition régulière des efforts. A titre d'exemple, il peut s'agir d'une pression comme illustrée à la figure 3.

Dans le cas de la technique dite précédemment de "surmoulage" comme évoquée précédemment, la solidarisation entre la peau 6 déjà élaborée et l'insert 3 peut être notamment réalisée par de la colle ou tout autre agent d'adhésion.

Ainsi, on réalise une structure stratifiée 1 qui présente des propriétés de souplesse, de déformabilité et d'élasticité localisée sous l'action notamment de contraintes mécaniques assurant une déformation et une remise en place de la structure stratifiée 1 homogène et régulière.

Bien entendu, les phénomènes de souplesse, de déformabilité et d'élasticité sont en outre fonction de l'épaisseur de l'insert 3 et de la peau 6 ainsi que de la répartition, du nombre et de la forme des incisions 7.

Selon l'invention, on réalise par le procédé une structure stratifiée 1 qui comprend une couche de matériau thermoplastique support 2 constituant un insert 3 et une couche 5 d'un matériau thermoplastique souple constituant une peau 6.

La couche support 2 de matériau rigide comporte des incisions localisées 7 qui coopèrent avec la couche 5 de matériau souple en vue de rendre la structure plus élastique, plus souple et plus confortable aux contraintes mécaniques.

En se référant aux figures 2 et 3, on voit que ces incisions 7 sont régulièrement réparties sur toute la surface de l'insert 3. Ces incisions 7 se présentent, par exemple ici, sensiblement sous la forme d'une répartition régulière de créneaux.

Bien entendu, la répartition, le nombre et la dimension de ces incisions sont variables en fonction des applications, et, c'est ainsi que dans la variante de réalisation, ces incisions 7 pourraient se présenter sensiblement sous la forme d'une spirale ou de toute autre forme susceptible de conférer à la structure 1 une souplesse suffisante et homogène.

Grâce à ces dispositions, comme il a été indiqué précédemment, sous l'action d'une contrainte mécanique, telle que par exemple celle d'une pression illustrée par le doigt 9 de la figure 3, on obtient une déformation élastique localisée de la structure stratifiée 1. Les découpes selon l'artifice de la découpe ne sont alors plus décelables sous le doigt.

Autrement dit, comme le montre plus particulièrement la flèche F₁ de la figure 3, la structure stratifiée 1 va se déplacer sans générer de modification de sa structure interne et, cette structure stratifiée 1 reprendra sa forme initiale telle qu'illustrée à la figure 2 dès que cette pression cessera par un phénomène de rappel.

Il est également à noter que complémentairement, on peut obtenir un aspect esthétique désiré du produit par une différence de couleurs des matériaux utilisés pour constituer les couches 3 et 5 de la structure. Ainsi, par la forme des incisions 7, et grâce à la différence de couleurs, on peut constituer des motifs ou des signes distinctifs, comme le montre par exemple la figure 4.

Bien entendu, il est également envisageable, d'utiliser en fonction des besoins, des matériaux thermoplastiques appropriés qui présentent des caractéristiques mécaniques de résistance et de souplesse déterminées ainsi que des compatibilités autorisant la fabrication de structure stratifiée 1 présentant les propriétés recherchées et de recyclage.

C'est ainsi, que la présente invention, trouvera une application particulière dans la fabrication d'éléments d'habillage intérieur de carrosserie de véhicule puisque dans ces domaines, on retrouve les contraintes et les dispositions décrites ci-dessus.

Naturellement, d'autres mises en oeuvre de la présente invention, à la portée de l'homme de l'art, auraient pu être envisagées sans pour autant sortir du cadre de la présente demande.

## Revendications

1. Procédé de fabrication d'une structure stratifiée (1), destinée notamment à la fabrication d'habillage intérieur d'une carrosserie de véhicule, consistant à réaliser la structure (1) à partir d'une couche d'un matériau (2) support constituant un insert (3) et d'une couche d'un matériau souple (5) constituant une peau (6), caractérisé en ce que:
- l'on prévoit une ou plusieurs incisions (7) de la couche de matériau support (2) dans des zones prédéterminées,
- l'on couvre, au moins partiellement, au moins l'une des faces (4) du matériau support (2) par la dite couche de matériau souple (5) afin qu'elle coopère avec la ou les incisions (7) localisées pour conférer des caractéristiques de souplesse dans les dites zones.

2. Procédé de fabrication selon la revendication 1, caractérisé en ce que l'on réalise les incisions (7) par une découpe traversante de matériau dans la couche support (2).

3. Procédé de fabrication selon la revendication 1, caractérisé en ce que l'on réalise les incisions (7) par moulage lors de la constitution de l'insert (3).

4. Procédé de fabrication selon la revendication 1, caractérisé en ce que l'on réalise la couche de matériau support rigide (2) par injection d'une matière thermoplastique.

5. Procédé de fabrication selon la revendication 1, caractérisé en ce que l'on réalise la couche de matériau (5) souple par surmoulage sur la couche support (2) d'une matière thermoplastique.

6. Procédé de fabrication selon la revendication 1, caractérisé en ce que l'on réalise l'insert (3) par "sous-moulage" sous une peau (6) préalablement élaborée.

7. Structure stratifiée destinée notamment à la fabrication d'éléments d'habillage intérieur d'une carrosserie de véhicule, obtenue par la mise en oeuvre du procédé selon la revendication 1, comprenant une couche (2) de matériau support constituant un insert et une couche (5) d'un matériau souple constituant une peau (6), caractérisée en ce que la couche de matériau rigide (2) comporte une ou plusieurs incisions dans des zones prédéterminées qui coopèrent avec la dite couche de matériau souple (5) pour conférer des caractéristiques de souplesse dans les dites zones.

8. Structure selon la revendication 7, caractérisée en ce qu'elle comporte des incisions (7) qui se présentent sensiblement sous la forme de créneaux.

9. Structure selon la revendication 7, caractérisée en ce qu'elle comporte des incisions (7) réparties se présentant sous la forme sensiblement de spirales.

10. Application du procédé selon la revendication 1, pour la fabrication d'éléments d'habillage intérieur d'une carrosserie de véhicule.
